# EUROPEAN PATENT SPECIFICATION

(11) **EP 3 305 979 B1**
(45) Date of publication and mention of the grant of the patent: **13.05.2020**
(21) Application number: 17191844.4
(22) Date of filing: 19.09.2017
(51) Int. Cl.: D06N 1/00

(54) **LINOLEUM COMPOSITION AND PRODUCTION METHOD THEREOF**
LINOLEUMZUSAMMENSETZUNG UND HERSTELLUNGSVERFAHREN DAFÜR
COMPOSITION DE LINOLÉUM ET SON PROCÉDÉ DE PRODUCTION

(30) Priority: 10.10.2016 LU 93254
(43) Date of publication of application: 11.04.2018
(73) Proprietor: Tarkett GDL, 9779 Lentzweiler (LU)
(72) Inventor: ARONICA, Tommaso, 9559 Wiltz (LU); BARTOLETTI, Antonella, 9559 WILTZ (LU); GUERRA, Daniele, 9559 Wiltz (LU); LONARDI, Ylenia, 9559 Wiltz (LU); PILERI, Roberto, 9559 Wiltz (LU)
(74) Representative: Aronova

(56) References cited:
- WO-A1-2004/063262
- US-A1- 2005 115 180
- US-A1- 2016 102 020
- US-B1- 6 462 123

## Description

### Field of the Invention

The invention generally relates to linoleum-based compositions, in particular for wall coverings. The invention more specifically relates to a linoleum composition with improved fire resistance and to a method for producing such a linoleum composition.

It may be worthwhile noting the term "linoleum" is used in some countries to designate vinyl flooring or wall covering. The present invention does not relate to plastic-based surface coverings but to linoleum based on oxidized vegetable oil, natural resin and organic filler material.

### Background of the Invention

Surface coverings, particularly linoleum surface coverings, are widely used to decorate surfaces in buildings or houses. Linoleum is often marketed in the form of rolls, but also in the form of tiles, which some people consider easier to install than rolls.

Linoleum surface coverings are made by calendering of a linoleum paste on a fibrous backing (typically made of jute). The linoleum paste generally comprises organic filler material such as, e.g., ground cork and/or wood flour, optionally a mineral filler material such as, e.g., ground limestone or chalk, and the so-called linoleum cement. The linoleum cement comprises oxidised vegetable oil (e.g. linseed and/or soybean oil), which is blended with a natural resin, such as, e.g. rosin (colophony) and/or copal. The linoleum paste may also comprise additives such as pigments.

WO 2011/160668 discloses a linoleum-based multilayer surface covering comprising a linoleum-based layer with a first backing layer made from jute and a second backing layer, which is provided as polymer-based layer on the underside of the jute layer. The polymer-based layer may be a PVC-based layer, a polypropylene-based layer or a polyester-based (e.g. polylactic acid-based) layer.

WO 2014/067570 relates to a linoleum-based surface covering element, comprising a support layer that carries a linoleum-based wear layer. The support layer comprises a cork-based layer and a first fabric layer. The wear layer comprising a linoleum-based layer and a second fabric layer. The wear layer and the support layer are joined by an adhesive layer that contacts the first and second fabric layers.

Linoleum surface coverings present the drawback of having modest fire resistance in comparison with synthetic (polymer-based) surface coverings. Several publications have addressed that problem.

US 2,428,282 discloses a linoleum product, wherein chlorinated resin provides improved fire resistance. The document further teaches to replace part or all of the usual cork and wood flour by short-fibered asbestos, rock wool, glass wool or the like.

WO 2004/063262 relates to a fire-retardant linoleum composition, wherein part of the limestone used as a filler is replaced by aluminium hydroxide, known beforehand for its fire-retardant properties. The document discloses a maximum aluminium hydroxide content of 38 wt.% in the "linoleum cement composition". It is unclear, however, what is meant exactly by the expression "linoleum cement composition" in the context of the document. The document further mentions that aluminium hydroxide has inferior processing properties compared to limestone.

US 2005/0115180 discloses a linoleum-based floor covering based with improved fire-protection properties. The floor covering comprises linoleum layer that contains a phosphorus-containing compound, solution, suspension, or dispersion as a liquid/viscous flame retardant in a quantity of up to 20 wt.%, in relation to the quantity of the layer. The document further mentions aluminium trihydroxide (aluminium hydroxide) as an inorganic flame retardant, which may be present in an amount of up to 60 % by weight in the linoleum paste.

US 2005/0048278 relates to a linoleum layer comprising a silicon-containing inorganic compound as a flame retardant in an amount of up to 40 % relative to the weight of the linoleum layer. On the one hand, the document cites aluminium trihydroxide as an additional flame retardant and indicates a broad range (from 0 to 60 wt.%) for its content in the linoleum paste. On the other hand, the document teaches that if wood flour is replaced with inorganic fillers other than perlite, a certain flammability class cannot be reached within the narrow formulation limits required to still allow processing.

US 2004/0146708 discloses the incorporation of a flame retardant from the group of expandable graphites into a linoleum layer. Aluminium trihydroxide is proposed as an additional flame retardant, its amounts being from 0.01 to 30 wt.% of the linoleum layer.
Document WO 2004/063262 relates to a composition with fire retarding properties with a high molecular polymer organic material of linoleum cement, as well as a fire retardant addition of aluminium hydroxide and optionally further fillers. The linoleum cement composition can contain up to 38 wt%.of aluminium hydroxide. The composition can contain calcium carbonate as well in a fire retarding composition of 10 - 90 wt % of linoleum cement.

### Summary of the Invention

It is known that incorporation of high amounts of aluminium trihydroxide into linoleum paste affects processability of the latter. Typically, processability issues can be observed if aluminium trihydroxide content (replacing organic and/or inorganic filler) reaches about 30 wt.% of the linoleum paste. The limitation of the aluminium trihydroxide content in linoleum has the consequence that linoleum shows somewhat inferior reaction to fire in comparison with competing product types, in particular plastic floor or wall coverings.

Surprisingly, the inventors have found that the maximum amount of aluminium trihydroxide in the linoleum can be increased, while preserving the processability of the paste, by modifying the production process of linoleum paste.

A first aspect of the invention thus relates to a method for the production of a linoleum composition. The process comprises a linoleum cement preparation step and a linoleum paste preparation step. The linoleum cement preparation includes oxidization of vegetable oil, e.g., in a Bedford oxidizer. Prior to or during the oxidation, resin and aluminium trihydroxide are admixed to the vegetable oil. The resin and the aluminium trihydroxide could be added at the same time, e.g. as a blend, or one after the other. The intermediate product resulting from this step is the so-called linoleum cement. The preparation of the linoleum paste includes mixing the linoleum cement with organic filler material, aluminium trihydroxide, and, optionally, mineral filler and/or pigment material. The amount of aluminium trihydroxide admixed to the linoleum cement (i.e. in the cement preparation step) is comprised in the range from 9 to 25 % by weight, preferably in the range from 9 to 18%, of the linoleum paste and the amount of aluminium trihydroxide added in the preparation of the linoleum paste (i.e. in the paste preparation step) is selected so as to reach a total aluminium trihydroxide content in the range from 55 to 68 % by weight, preferably 57 to 67 % by weight, more preferably 61 to 66 % by weight, of the linoleum paste.

It is worthwhile noting again that the aluminium trihydroxide is not added all at once but part of it is among the ingredients of the cement (together with vegetable oil, resin and other possible cement ingredients), which are mixed together prior to and/or during the cement oxidation step. The remainder of the aluminium trihydroxide is incorporated into the paste. It has been found that this allows incorporation of greater quantities of aluminium trihydroxide than those one could incorporate in the linoleum paste production step only, while preserving the processability of the mixture.

It will be appreciated that aluminum trihydroxide has no negative environmental and health impact when used in linoleum and is compatible with cradle-to-cradle production.

A second aspect of the invention relates to a linoleum composition, comprising or consisting of a linoleum paste, the linoleum paste comprising oxidized vegetable oil, resin, organic filler material and aluminium trihydroxide, wherein the total aluminium trihydroxide content is comprised in the range from 61 to 66 % by weight, of the linoleum paste.

Also disclosed is a linoleum wall covering comprising a linoleum paste, e.g. obtainable by the method described, the linoleum wall covering satisfying the requirements of classification D-s2, d0, preferably C-s2, d0 and most preferably B-s2, d0 pursuant to European standard EN 13501-1:2007+A1:2009. Unless otherwise specified, any reference to a standard used herein is a reference to the version of the standard in force on the date of filing or, if this patent (application) claims priority from an earlier filed patent application, to the version of the standard in force on the date of filing of that earlier application. According to the above-indicated standard, the main classification of the linoleum wall covering is D, C or B, which indicates the reaction of the product to fire ("fire behaviour"). Without going into the details, products classified in class D are capable of resisting, for a certain period and under well-defined test conditions, a flame attack without substantial flame spread. Products classified in class C satisfy more stringent requirements than those in class D and products classified in class B satisfy yet more stringent requirements. Additional classification s2 relates to the smoke production and indicates that the total smoke production as well as the ratio of increase in smoke production are limited. Additional classification d0 relates to the generation of flaming droplets or particles and indicates that in the prescribed test conditions, no flaming droplets or particles occurred. Details on the classification criteria and the test conditions can be found in the above-indicated norm and the norms referred to therein (e.g. EN ISO 11925-2 and EN 13823 for the test methods).

It will be appreciated that the product according to the second aspect of the invention and the product disclosed in the previous paragraph are enabled for the first time thanks to the method according to the first aspect of the invention.

According to an embodiment, the vegetable oil is selected from the group consisting of: linseed oil, soybean oil, China wood oil, sunflower seed oil, perilla oil, castor oil, other drying oils and mixtures thereof.

The resin may be any natural resin suitable for linoleum production. Preferably, however, the resin is selected from the group consisting of: rosin (colophony: tall oil rosin, wood rosin, and/or gum rosin), copal, kauri gum, dammar, and mixtures thereof.

According to an embodiment, the linoleum cement preparation comprises the admixture of siccative (drying agent) and/or ground linoleum scrap.

The organic filler material is preferably selected from the group consisting of: wood flour, cork flour, other vegetable flour (e.g. corn flour, wheat flour, etc.) and mixtures thereof.

According to an embodiment, the amount of vegetable oil in the linoleum paste is comprised in the range from 20 to 30 % by weight of the linoleum paste, the amount of resin in the linoleum paste is comprised in the range from 2 to 5 % by weight of the linoleum paste, the amount of organic filler material in the linoleum paste is comprised in the range from 3 to 6 % by weight of the linoleum paste, the amounts of all components being selected such that they sum up to 100 % of the weight of the linoleum paste.

According to an embodiment, the amount of mineral filler and/or pigment material in the linoleum paste is comprised in the range from 1 to 6 % by weight of the linoleum paste. As used herein, the expression "mineral filler and/or pigment material" is intended to include mineral fillers or pigments but, evidently, shall not be held to encompass aluminium trihydroxide. Any mineral filler and/or pigment material suitable for linoleum production could be used. Preferably, however, the mineral filler and/or pigment material is selected from the group consisting of: chalk, limestone, calcium carbonate, stearic acid coated calcium carbonate, calcium stearate coated calcium carbonate, magnesium stearate coated calcium carbonate, zinc stearate coated calcium carbonate, silicon dioxide, titanium dioxide, zinc oxide, aluminium oxide, magnesium oxide, diatomaceous earth, and mixtures thereof. Among the above mineral fillers, the coated calcium carbonates are particularly preferred as they positively impact processability of the linoleum paste. Of specific interest for still more improved processability are coated calcium carbonates having a D50 diameter comprised in the range from 0.5 to 10 µm and a D98 diameter in the range from 2 to 40 µm. The D50 diameter is defined as the particle size value (equivalent spherical diameter as measured by laser diffraction) less than which there are 50% by weight of the particles, the D98 diameter is defined as the particle size value, less than which there are 98% by weight of the particles. Particle size characterisation using laser diffraction methods is preferably carried out according to ISO 13320-1 standard.

The method may comprise calendering the linoleum paste on a fibrous backing. Accordingly, the linoleum composition or the linoleum wall covering according to the second and third aspect of the invention may comprise a fibrous backing having the linoleum paste calendered thereon. The thickness of the linoleum (backing and linoleum paste) after calendering is preferably comprised in the range from 1.2 mm to 3.5 mm, more preferably in the range from 1.4 mm to 2.8 mm.

### Brief Description of the Drawings

The accompanying drawing illustrates aspects of the present invention and, together with the detailed description, serves to explain the principles thereof. In the drawing:

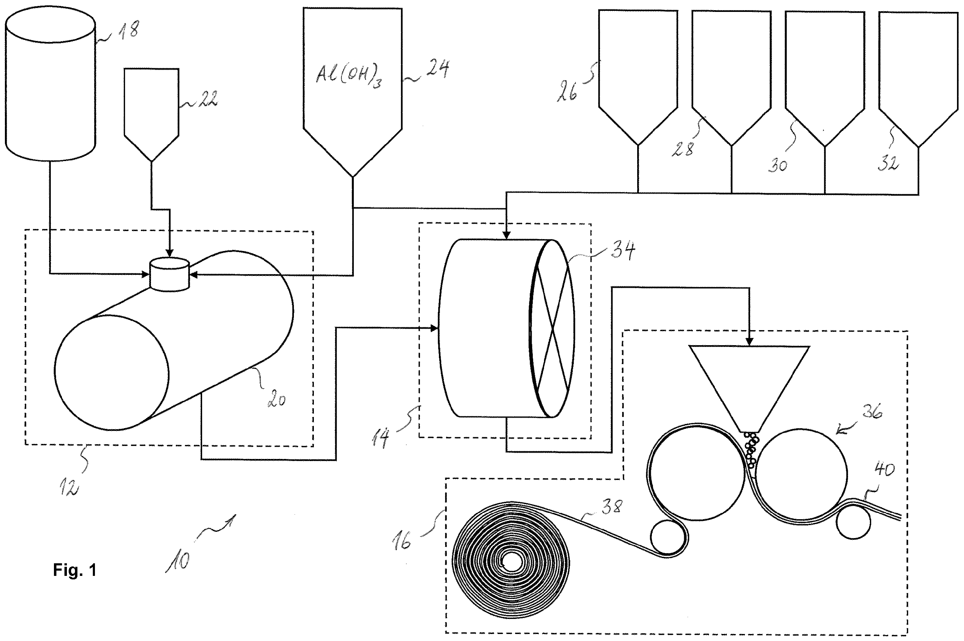

Fig. 1: is a schematic flowchart of the production method of a linoleum wall covering according to an embodiment of the invention.

### Detailed Description of a Preferred Embodiment

Fig. 1 illustrates the production process of a linoleum wall covering according to a preferred embodiment of the invention. The process 10 comprises linoleum cement preparation 12, linoleum paste preparation 14 and calendering 16 the paste on a textile backing.

Preparation of the linoleum cement includes oxidization of vegetable drying oil 18 (typically linseed oil or a mixture of linseed oil and another vegetable drying oil such as, e.g., soybean or sunflower oil) in an oxidizer 20 (e.g. a Bedford oxidizer) and mixing the vegetable oil 18 with resin 22 and a first amount of aluminium trihydroxide (Al(OH)₃) 24. Oxidation is carried out at moderately elevated temperature (e.g. 70°C to 110°C) in oxygen-containing atmosphere (e.g. air). Siccative may be added to accelerate oxidation. Ground linoleum production scrap may also be added. The ingredients of the linoleum cement are stirred until the mixture has reached the desired viscosity. The linoleum cement is then cooled down and, possibly, left for further curing.

In the second production step, the linoleum cement is mixed with organic fillers such as, e.g., cork flour 26 and/or wood flour 28 , mineral fillers 30 (e.g. chalk, limestone, etc.) and pigments 32 (e.g. TiO₂, carbon black, or other organic and/or inorganic pigments), as well a second amount of aluminium trihydroxide 24. The mixing may be carried out in any suitable industrial mixer 34 (e.g. a Banbury mixer, a batch mixer, etc.) and produces the linoleum paste.

Using calender 36, the linoleum paste is calendered on a textile backing 38 in the third production step. Traditionally, a jute backing is used but other fibrous (woven or non-woven) backings could be used as well.

The linoleum sheets 40 are thereafter stored in maturation chambers for several days.

The first and second amounts of the aluminium trihydroxide together represent between 55 and 68 % by weight (preferably between 62 and 68 % by weight) of the linoleum paste. The first amount of the aluminium trihydroxide, which is admixed in the cement preparation step 12, amounts to between 9 and 25 % by weight of the resulting linoleum paste.

### Example 1

A decorative linoleum wall covering may be produced generally as described above using the generic composition of the linoleum paste indicated in table 1:

**Table 1**

| **Ingredient** | **Amount (wt.%)** | **Added when?** |
|---|---|---|
| Linseed oil | A = 20 to 30 | Cement preparation (oxidation) |
| Rosin | B = 2 to 5 | Cement preparation (oxidation) |
| Al(OH)₃ | C1= 9 to 25 | Cement preparation (oxidation) |
| Wood and cork flour | D = 3 to 6 | Paste preparation (mixing step) |
| Al(OH)₃ | C2 = 30 to 59 | Paste preparation (mixing step) |
| Mineral fillers, pigments and/or processing aids | E= 0 to 6 | Paste preparation (mixing step) |
| Total | 100 | |
| where C1 and C2 are chosen such that C1+C2 ∈ [55, 66] and where A, B, C1, C2 and D are chosen such that A+B+C1 +C2+D ∈ [94, 100]. | | |

The linoleum paste obtained with the above formulation is calendered on a fibrous backing (preferably consisting essentially of vegetable fibres) so as to achieve a thickness from 1.2 mm to 3.5 mm. Maturation preferably takes place a temperature of 80°C for 15 to 25 days.

### Example 2

A decorative linoleum wall covering was produced generally as described with reference to Fig. 1. The composition of the linoleum paste is indicated in table 2:

**Table 2**

| **Ingredient** | **Amount (wt.%)** | **Added when?** |
|---|---|---|
| Linseed oil | 24 | Cement preparation (oxidation) |
| Rosin | 3.5 | Cement preparation (oxidation) |
| Al(OH)₃ | 15 | Cement preparation (oxidation) |
| Wood and cork flour | 4.5 | Paste preparation (mixing step) |
| Al(OH)₃ | 49 | Paste preparation (mixing step) |
| Coated calcium carbonate and pigments | 4 | Paste preparation (mixing step) |
| Total | 100 | |

The linoleum paste was calendered on a jute backing and matured at a temperature of 80°C for 15 to 25 days.

The resulting wall covering had a thickness in the range from 1.4 mm to 2.8 mm and reached classification B-s2, d0 according to European standard EN 13501-1 :2007+A 1 :2009.

### Example 3

A decorative linoleum wall covering was produced as in example 2, but with the following composition:

**Table 3**

| **Ingredient** | **Amount (wt.%)** | **Added when?** |
|---|---|---|
| Linseed oil | 22.6 | Cement preparation (oxidation) |
| Rosin | 3.3 | Cement preparation (oxidation) |
| Al(OH)₃ | 14.5 | Cement preparation (oxidation) |
| Wood and cork flour | 4 | Paste preparation (mixing step) |
| Al(OH)₃ | 47.5 | Paste preparation (mixing step) |
| Ultrafine coated calcium carbonate (D50 = 1.1 µm, D98 = 2.8 µm, density 600 kg/m³, oil absorption = 18 g/100g) and pigments | 8.1 | Paste preparation (mixing step) |
| Total | 100 | |

While a specific embodiment and examples have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. A method for the production of a linoleum composition, the method comprising:
a linoleum cement preparation step (12) and a linoleum paste preparation step (14), wherein the linoleum cement preparation (12) includes:
oxidization of vegetable oil (18), and
admixture of resin (22) and aluminium trihydroxide (24) to the vegetable oil (18) prior to or during oxidization;
and wherein the linoleum paste preparation (14) includes:
mixing the linoleum cement with organic filler material (26, 28), aluminium trihydroxide (24), and, optionally, mineral filler (30) and/or pigment (32) material,
wherein the amount of aluminium trihydroxide (24) admixed to the linoleum cement is comprised in the range from 9 to 25 % by weight of the linoleum paste and wherein the amount of aluminium trihydroxide (24) added in the preparation of the linoleum paste is selected so as to reach a total aluminium trihydroxide (24) content in the range from 55 to 68 % by weight of the linoleum paste.

2. The method as claimed in claim 1, wherein the vegetable oil (18) is selected from the group consisting of: linseed oil, soybean oil, China wood oil, sunflower seed oil, perilla oil, castor oil, and mixtures thereof.

3. The method as claimed in claim 1 or 2, wherein the resin (22) is selected from the group consisting of: rosin, copal, kauri gum, dammar, and mixtures thereof.

4. The method as claimed in any one of claims 1 to 3, wherein the linoleum cement preparation (12) further comprises the admixture of siccative and/or ground linoleum scrap.

5. The method as claimed in any one of claims 1 to 4, wherein the organic filler material (26, 28) is selected from the group consisting of: wood flour, cork flour, corn flour, wheat flour, another vegetable flour, and mixtures thereof.

6. The method as claimed in any one of claims 1 to 5, wherein the amount of vegetable oil (18) in the linoleum paste is comprised in the range from 20 to 30 % by weight of the linoleum paste, wherein the amount of resin (22) in the linoleum paste is comprised in the range from 2 to 5 % by weight of the linoleum paste, wherein the amount of organic filler material (26, 28) in the linoleum paste is comprised in the range from 3 to 6 % by weight of the linoleum paste, and wherein all components sum up to 100 % of the linoleum paste.

7. The method as claimed in any one of claims 1 to 6, wherein the linoleum paste preparation (14) includes mixing the linoleum cement with mineral filler (30) and/or pigment (32) material, and wherein the amount of mineral filler (30) and/or pigment (32) material in the linoleum paste is comprised in the range from 1 to 6 % by weight of the linoleum paste.

8. The method as claimed in claim 7, wherein the mineral filler (30) and/or pigment (32) material is selected from the group consisting of: chalk, limestone, calcium carbonate, stearic acid coated calcium carbonate, calcium stearate coated calcium carbonate, magnesium stearate coated calcium carbonate, zinc stearate coated calcium carbonate, silicon dioxide, titanium dioxide, zinc oxide, aluminium oxide, magnesium oxide, diatomaceous earth, and mixtures thereof.

9. The method as claimed in any one of claims 1 to 8, comprising calendering the linoleum paste on a fibrous backing.

10. A linoleum composition, comprising or consisting of a linoleum paste, the linoleum paste comprising oxidized vegetable oil (18), resin (22), organic filler material (26, 28) and aluminium trihydroxide (24), **characterized in that** the total aluminium trihydroxide (24) content is comprised in the range from 61 to 66 % by weight of the linoleum paste.

11. The linoleum composition as claimed in claim 10, wherein the amount of vegetable oil (18) in the linoleum paste is comprised in the range from 20 to 30 % by weight of the linoleum paste, wherein the amount of resin (22) in the linoleum paste is comprised in the range from 2 to 5 % by weight of the linoleum paste, wherein the amount of organic filler material (26, 28) in the linoleum paste is comprised in the range from 3 to 6 % by weight of the linoleum paste, and wherein all components sum up to 100 % of the linoleum paste.

12. The linoleum composition as claimed in claim 11, wherein the linoleum paste further comprises mineral filler (30) and/or pigment (32) material, and wherein the amount of mineral filler (30) and/or pigment (32) material in the linoleum paste is comprised in the range from 1 to 6 % by weight of the linoleum paste.

13. The linoleum composition as claimed in any one of claims 10 to 12, comprising a fibrous backing having the linoleum paste calendered thereon.

14. A linoleum wall covering, comprising or consisting of a linoleum composition as claimed in any one of claims 10 to 14.

## Patentansprüche

1. Verfahren zur Produktion einer Linoleumzusammensetzung, wobei das Verfahren umfasst:
einen Schritt zur Herstellung von Linoleumzement (12), und einen Schritt zur Herstellung von Linoleumpaste (14), wobei die Herstellung von Linoleumzement (12) einschließt:
Oxidation von pflanzlichem Öl (18), und
Zumischung von Harz (22) und Aluminiumtrihydroxid (24) zu dem pflanzlichen Öl (18) vor oder während der Oxidation; und
wobei die Herstellung der Linoleumpaste (14) einschließt:
Mischen des Linoleumzements mit organischem Füllstoffmaterial (26, 28), Aluminiumtrihydroxid (24) und gegebenenfalls Mineralfüllstoff (30) und/oder Pigmentmaterial (32),
wobei die Menge an Aluminiumtrihydroxid (24), die dem Linoleumzement zugemischt wird, im Bereich von 9 bis 25 Gew.% der Linoleumpaste liegt, und wobei die Menge an Aluminiumtrihydroxid (24), die in der Herstellung der Linoleumpaste zugefügt wird, so ausgewählt wird, dass ein Gesamtgehalt an Aluminiumhydroxid (24) im Bereich von 55 bis 68 Gew.% der Linoleumpaste erreicht wird.

2. Verfahren nach Anspruch 1, wobei das pflanzliche Öl (18) ausgewählt ist aus der Gruppe bestehend aus Leinöl, Sojabohnenöl, Chinaholzöl (Tungbaumöl), Sonnenblumenöl, Perillaöl, Castoröl und Mischungen davon.

3. Verfahren nach einem der Ansprücher 1 oder 2, wobei das Harz (22) ausgewählt ist aus der Gruppe bestehend aus Kolophonium, Kopal, Kaurigummi, Dammar und Mischungen davon.

4. Verfahren nach einem der Ansprüche 1 bis 3, wobei die Herstellung von Linoleumzement (12) des Weiteren die Zumischung von Sikkativ und/oder gemahlenem Linoleumverschnitt umfasst.

5. Verfahren nach einem der Ansprüche 1 bis 4, wobei das organische Füllstoffmaterial (26, 28) ausgewählt ist aus der Gruppe bestehend aus Holzmehl, Korkmehl, Maismehl, Weizenmehl, sonstigem pflanzlichem Mehl und Mischungen davon.

6. Verfahren nach einem der Ansprüche 1 bis 5, wobei die Menge an pflanzlichem Öl (18) in der Linoleumpaste im Bereich von 20 bis 30 Gew.% der Linoleumpaste liegt, wobei die Menge an Harz (22) in der Linoleumpaste im Bereich von 2 bis 5 Gew.% der Linoleumpaste liegt,
wobei die Menge an organischem Füllstoffmaterial (26, 28) in der Linoleumpaste im Bereich von 3 bis 6 Gew.% der Linoleumpaste liegt, und wobei die Summe aller Komponenten 100 % der Linoleumpaste ergibt.

7. Verfahren nach einem der Ansprüche 1 bis 6, wobei die Herstellung der Linoleumpaste (14) Mischen des Linoleumzements mit Mineralfüllstoff (30) und/oder Pigmentmaterial (32) einschließt, und wobei die Menge an Mineralfüllstoff (30) und/oder Pigmentmaterial (32) in der Linoleumpaste im Bereich von 1 bis 6 Gew.% der Linoleumpaste liegt.

8. Verfahren nach Anspruch 7, wobei der Mineralfüllstoff (30) und/oder das Pigmentmaterial (32) ausgewählt ist bzw. sind aus der Gruppe bestehend aus: Kreide, Kalkstein, Calciumcarbonat, mit Stearinsäure beschichtetem Calciumcarbonat, mit Calciumstearat beschichtetem Calciumcarbonat, mit Magnesiumstearat beschichtetem Calciumcarbonat, mit Zinkstearat beschichtetem Calciumcarbonat, Siliciumdioxid, Titandioxid, Zinkoxid, Aluminiumoxid, Magnesiumoxid, Kieselerde und Mischungen davon.

9. Verfahren nach einem der Ansprüche 1 bis 8, umfassend Kalandrieren der Linoleumpaste auf einem Faserstoffrücken.

10. Linoleumzusammensetzung, umfassend oder bestehend aus einer Linoleumpaste, wobei die Linoleumpaste oxidiertes pflanzliches Öl (18), Harz (22), organisches Füllstoffmaterial (26, 28) und Aluminiumtrihydroxid (24) umfasst, **dadurch gekennzeichnet, dass** der Gesamtgehalt an Aluminiumtrihydroxid (24) im Bereich von 61 bis 66 Gew.% der Linoleumpaste liegt.

11. Linoleumzusammensetzung nach Anspruch 10, wobei die Menge an pflanzlichem Öl (18) in der Linoleumpaste im Bereich von 20 bis 30 Gew.% der Linoleumpaste liegt, wobei die Menge an Harz (22) in der Linoleumpaste im Bereich von 2 bis 5 Gew.% der Linoleumpaste liegt, wobei die Menge an organischem Füllstoffmaterial (26, 28) in der Linoleumpaste im Bereich von 3 bis 6 Gew.% der Linoleumpaste liegt, und wobei die Summe aller Komponenten 100 % der Linoleumpaste beträgt.

12. Linoleumzusammensetzung nach Anspruch 11, wobei die Linoleumpaste des Weiteren Mineralfüllstoff (30) und/oder Pigmentmaterial (32) umfasst, und wobei die Menge an Mineralfüllstoff (30) und/oder Pigmentmaterial (32) in der Linoleumpaste im Bereich von 1 bis 6 Gew.% der Linoleumpaste liegt.

13. Linoleumzusammensetzung nach einem der Ansprüche 10 bis 12, umfassend einen Faserstoffrücken mit der darauf kalandrierten Linoleumpaste.

14. Linoleumwandbedeckung, umfassend oder bestehend aus einer Linoleumzusammensetzung wie in einem der Ansprüche 10 bis 14 beansprucht.

## Revendications

1. Méthode de production d'une composition de linoléum, la méthode comprenant :
une étape de préparation d'un ciment de linoléum (12) et une étape de préparation d'une pâte de linoléum (14), où la préparation d'un ciment de linoléum (12) comporte :
l'oxydation d'une huile végétale (18), et
le mélange d'une résine (22) et de trihydroxyde d'aluminium (24) à l'huile végétale (18) avant ou pendant l'oxydation ;
et où la préparation d'une pâte de linoléum (14) comporte :
le mélange du ciment de linoléum avec un matériau de charge organique (26, 28), du trihydroxyde d'aluminium (24), et, éventuellement, un matériau de charge minérale (30) et/ou de pigment (32),
où la quantité de trihydroxyde d'aluminium (24) mélangée au ciment de linoléum est comprise dans la plage allant de 9 à 25% en poids de la pâte de linoléum, et où la quantité de trihydroxyde d'aluminium (24) ajoutée dans la préparation de la pâte de linoléum est choisie de façon à atteindre une teneur totale en trihydroxyde d'aluminium (24) dans la plage allant de 55 à 68% en poids de la pâte de linoléum.

2. Méthode selon la revendication 1, dans laquelle l'huile végétale (18) est choisie dans le groupe constitué par : l'huile de lin, l'huile de soja, l'huile de bois de Chine, l'huile de graines de tournesol, l'huile de périlla, l'huile de ricin, et des mélanges de celles-ci.

3. Méthode selon la revendication 1 ou 2, dans laquelle la résine (22) est choisie dans le groupe constitué par : la colophane, la résine de copal, le copal de Kauri, la résine de Dammar, et des mélanges de ceux-ci.

4. Méthode selon l'une quelconque des revendications 1 à 3, dans laquelle la préparation d'un ciment de linoléum (12) comprend en outre le mélange de chutes de linoléum siccatives et/ou broyées.

5. Méthode selon l'une quelconque des revendications 1 à 4, dans laquelle le matériau de charge organique (26, 28) est choisi dans le groupe constitué par : la farine de bois, la farine de liège, la farine de maïs, la farine de blé, une autre farine végétale, et des mélanges de celles-ci.

6. Méthode selon l'une quelconque des revendications 1 à 5, dans laquelle la quantité d'huile végétale (18) dans la pâte de linoléum est comprise dans la plage allant de 20 à 30% en poids de la pâte de linoléum, où la quantité de résine (22) dans la pâte de linoléum est comprise dans la plage allant de 2 à 5% en poids de la pâte de linoléum, où la quantité de matériau de charge organique (26, 28) dans la pâte de linoléum est comprise dans la plage allant de 3 à 6% en poids de la pâte de linoléum, et où tous les composants totalisent 100% de la pâte de linoléum.

7. Méthode selon l'une quelconque des revendications 1 à 6, dans laquelle la préparation d'une pâte de linoléum (14) comporte le mélange du ciment de linoléum avec un matériau de charge minérale (30) et/ou de pigment (32), et où la quantité de matériau de charge minérale (30) et/ou de pigment (32) dans la pâte de linoléum est comprise dans la plage allant de 1 à 6% en poids de la pâte de linoléum.

8. Méthode selon la revendication 7, dans laquelle le matériau de charge minérale (30) et/ou de pigment (32) est choisi dans le groupe constitué par : la craie, la pierre à chaux, le carbonate de calcium, le carbonate de calcium revêtu d'acide stéarique, le carbonate de calcium revêtu de stéarate de calcium, le carbonate de calcium revêtu de stéarate de magnésium, le carbonate de calcium revêtu de stéarate de zinc, le dioxyde de silicium, le dioxyde de titane, l'oxyde de zinc, l'oxyde d'aluminium, l'oxyde de magnésium, la terre de diatomées, et des mélanges de ceux-ci.

9. Méthode selon l'une quelconque des revendications 1 à 8, comprenant le calandrage de la pâte de linoléum sur un support fibreux.

10. Composition de linoléum, comprenant, ou étant constituée par, une pâte de linoléum, la pâte de linoléum comprenant une huile végétale (18) oxydée, une résine (22), un matériau de charge organique (26, 28), et du trihydroxyde d'aluminium (24), **caractérisée en ce que** la teneur totale de trihydroxyde d'aluminium (24) est comprise dans la plage allant de 61 à 66% en poids de la pâte de linoléum.

11. Composition de linoléum selon la revendication 10, dans laquelle la quantité d'huile végétale (18) dans la pâte de linoléum est comprise dans la plage allant de 20 à 30% en poids de la pâte de linoléum, où la quantité de résine (22) dans la pâte de linoléum est comprise dans la plage allant de 2 à 5% en poids de la pâte de linoléum, où la quantité de matériau de charge organique (26, 28) dans la pâte de linoléum est comprise dans la plage allant de 3 à 6% en poids de la pâte de linoléum, et où tous les composants totalisent 100% de la pâte de linoléum.

12. Composition de linoléum selon la revendication 11, dans laquelle la pâte de linoléum comprend en outre un matériau de charge minérale (30) et/ou de pigment (32), et où la quantité de matériau de charge minérale (30) et/ou de pigment (32) dans la pâte de linoléum est comprise dans la plage allant de 1 à 6% en poids de la pâte de linoléum.

13. Composition de linoléum selon l'une quelconque des revendications 10 à 12, comprenant un support fibreux sur lequel on a mis en œuvre le calandrage de la pâte de linoléum.

14. Revêtement mural en linoléum, comprenant, ou étant constitué par, une composition de linoléum selon l'une quelconque des revendications 10 à 14.
